# EUROPEAN PATENT APPLICATION

(11) **EP 4 567 964 A1**
(43) Date of publication of application: **11.06.2025**
(21) Application number: 23849446.2
(22) Date of filing: 02.08.2023
(51) Int. Cl.: H01M 10/613, H01M 10/625, H01M 10/6554

(54) **COOLING SYSTEM FOR BATTERY, BATTERY PACK, AND VEHICLE**

(30) Priority: 02.08.2022 CN 202222024670 U
(71) Applicant: BYD Company Limited, Shenzhen, Guangdong 518118 (CN)
(72) Inventor: SU, Hongchao, Shenzhen, Guangdong 518118 (CN); JIANG, Zhimin, Shenzhen, Guangdong 518118 (CN); TAN, Jing, Shenzhen, Guangdong 518118 (CN); GUO, Shu, Shenzhen, Guangdong 518118 (CN)
(74) Representative: Mathys & Squire
(86) International application number: PCT/CN2023/110662
(87) International publication number: WO 2024/027740

(57) **Abstract**

A cooling system (100) for a battery, a battery pack (200), and a vehicle (300). The cooling system (100) for a battery comprises a main cooling plate (1) and connecting piece cooling plates (2); a first cooling channel is provided in the main cooling plate (1), and the main cooling plate (1) is used for cooling battery cells (4); the connecting piece cooling plates (2) are provided on the main cooling plate (1); a second cooling channel is provided in each connecting piece cooling plate (2); and the connecting piece cooling plates (2) are used for cooling connecting pieces (5).

## Description

### CROSS-REFERENCE TO RELATED APPLICATIONS

The present disclosure claims priority to and benefits of Chinese Patent Application No. 202222024670.X, filed on August 2, 2022 and entitled "COOLING SYSTEM FOR BATTERY, BATTERY PACK, AND VEHICLE". The entire content of the above-referenced application is incorporated herein by reference.

### FIELD

The present disclosure relates to the field of battery technologies, and specifically, to a cooling system for a battery, a battery pack, and a vehicle.

### BACKGROUND

In the related art, a connecting sheet in a battery pack is passively and naturally cooled only by a small amount of air in the battery pack. However, this manner has a limited heat dissipation capability and a poor heat dissipation effect.

### SUMMARY

An objective of the present disclosure is to provide a cooling system for a battery, a battery pack, and a vehicle. Therefore, efficient heat dissipation of a connecting sheet can be implemented.

To achieve the foregoing objective, the present disclosure provides a cooling system for a battery comprising a main cooling plate and a connecting sheet cooling plate. A first cooling channel is provided in the main cooling plate. The main cooling plate is configured to cool a battery cell. The connecting sheet cooling plate is arranged on the main cooling plate. A second cooling channel is provided in the connecting sheet cooling plate. The connecting sheet cooling plate is configured to cool a connecting sheet.

Optionally, the first cooling channel and the second cooling channel are independent of each other and do not communicate with each other.

Optionally, the first cooling channel communicates with the second cooling channel.

Optionally, first connectors are arranged at an inlet and an outlet of the second cooling channel respectively, a plurality of second connectors are arranged on the main cooling plate, and the second connectors and the first connectors are in a one-to-one correspondence and communicate with each other.

Optionally, a sealing hose is sleeved at a joint between the first connector and the second connector.

Based on the foregoing technical solution, the present disclosure further provides a battery pack, comprising the cooling system for a battery.

Optionally, the battery pack further comprises a plurality of battery cells and a plurality of connecting sheets, the battery cells are fixedly arranged on the main cooling plate, the connecting sheets are connected to terminals of the battery cells, and the connecting sheet cooling plate is fixedly connected to the connecting sheets.

Optionally, the battery cells are fixedly connected to the main cooling plate through a heat conductive adhesive.

Optionally, the connecting sheet cooling plate is fixedly connected to the connecting sheet through a heat conductive adhesive.

Optionally, the battery pack further comprises a battery tray, the main cooling plate comprises a first cooling plate, and the first cooling plate is integrated on the battery tray.

Optionally, the battery tray comprises an outer frame and a bottom plate, and the first cooling plate is integrated on the bottom plate.

Optionally, the battery pack further comprises a sealing cover, the main cooling plate further comprises a second cooling plate, and the second cooling plate is integrated on the sealing cover.

Based on the foregoing technical solution, the present disclosure further provides a vehicle, comprising the cooling system for a battery or the battery pack.

Through the foregoing technical solution, the cooling system for a battery provided in the present disclosure comprises the main cooling plate and the connecting sheet cooling plate. The first cooling channel is provided in the main cooling plate. A cooling medium (for example, a coolant) is introduced into the first cooling channel in the main cooling plate, to implement heat dissipation and cooling of the battery cell. In addition, the second cooling channel is provided in the connecting sheet cooling plate. A cooling medium (for example, a coolant) is introduced into the second cooling channel in the connecting sheet cooling plate, to implement heat dissipation and cooling of the connecting sheet. Efficient and timely heat dissipation can be performed on the connecting sheet in the battery pack through the added connecting sheet cooling plate, so that an impact on performance and a service life of the battery caused by overheating of the connecting sheet is reduced.

Other features and advantages of the present disclosure are described in detail in the following detailed description part.

### BRIEF DESCRIPTION OF THE DRAWINGS

The accompanying drawings are provided for further understanding of the present disclosure and constitute a part of the specification, and explain the present disclosure together with the following specific implementations, but do not constitute a limitation to the present disclosure. In the figures:
FIG. 1 is a schematic structural diagram of a cooling system for a battery according to an exemplary embodiment of the present disclosure;
FIG. 2 is an enlarged view of a position A in FIG. 1;
FIG. 3 is a partial schematic structural diagram of a battery pack according to an exemplary embodiment of the present disclosure;
FIG. 4 is a three-dimensional exploded view of a battery pack according to an exemplary embodiment of the present disclosure;
FIG. 5 is another three-dimensional exploded view of a battery pack according to an exemplary embodiment of the present disclosure;
FIG. 6 is an enlarged view of a position B in FIG. 5;
FIG. 7 is a schematic structural diagram of a battery tray in a battery pack according to an exemplary embodiment of the present disclosure; and
FIG. 8 is a schematic diagram of a vehicle according to an exemplary embodiment of the present disclosure.

### List of Reference Numerals:

1-main cooling plate; 11-inlet connector; 12-outlet connector; 13-second connector; 14-first cooling plate; 15-second cooling plate; 2-connecting sheet cooling plate; 21-first connector; 3-sealing hose; 4-battery cell; 41-fixed support; 42-aerogel; 43-first heat conductive adhesive; 5-connecting sheet; 51-second heat conductive adhesive; 6-flexible circuit board; 7-protective housing; 8-outer frame; 81-expansion beam; 82-intermediate longitudinal beam; 9-bottom plate; 100-cooling system for battery; 200-battery pack; 201-battery tray; and 300-vehicle.

### DETAILED DESCRIPTION

The following describes the specific implementations of the present disclosure in detail with reference to the accompanying drawings. It should be understood that the specific implementations described herein are merely used to describe and explain the present disclosure, but are not intended to limit the present disclosure.

In the present disclosure, unless otherwise specified, used orientation terms such as "inside and outside" are for the contour of a corresponding component. In addition, when the following descriptions relate to the accompanying drawings, unless indicated otherwise, same numbers in different accompanying drawings represent same or similar elements. The implementations described in the following exemplary embodiments do not represent all implementations consistent with the present disclosure. Instead, they are merely examples of apparatuses and methods consistent with some aspects related to the present disclosure as recited in the appended claims.

In a battery pack of an electric vehicle, a connecting sheet is generally arranged. The connecting sheet is firmly connected to a terminal of a battery cell (Cell) in a welding manner or another connection manner, to implement series and parallel connection between battery cells. During fast charging, a battery, the connecting sheet, and another electrical connection structure are all subjected to a continuous large current. Resistance of the connecting sheet and the other electrical connection structure and resistance increased by welding all generate a large amount of heat. If the heat generated by the connecting sheet and the other electrical connection structure cannot be dissipated in time, a temperature of the battery increases. Consequently, performance, a service life, and the like of the battery are affected.

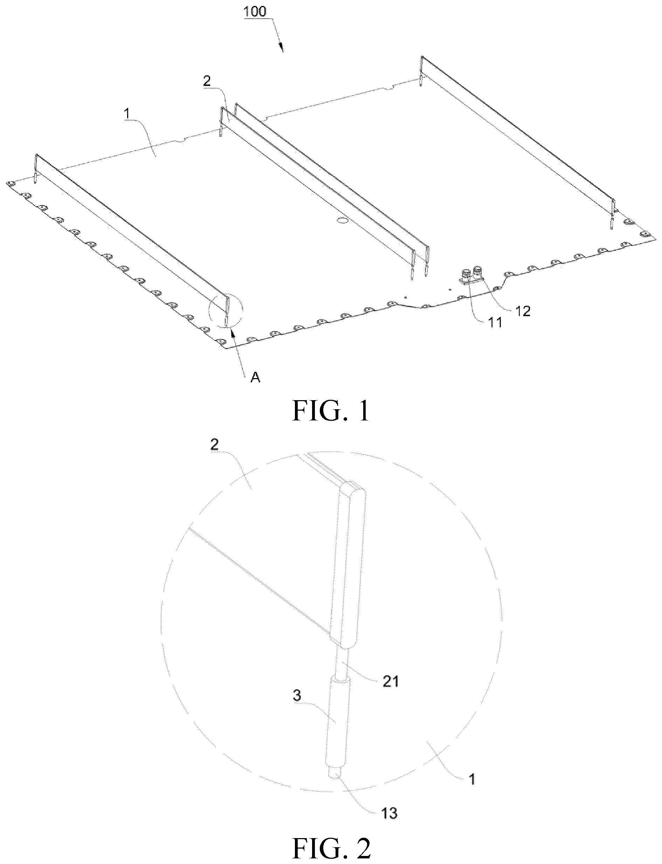

According to the specific implementations of the present disclosure, referring to FIG. 1 to FIG. 7, a cooling system 100 for a battery is provided, comprising a main cooling plate 1 and a connecting sheet cooling plate 2. A first cooling channel is provided in the main cooling plate 1. The main cooling plate 1 is configured to cool a battery cell 4. The connecting sheet cooling plate 2 is arranged on the main cooling plate 1. A second cooling channel is provided in the connecting sheet cooling plate 2. The connecting sheet cooling plate 2 is configured to cool a connecting sheet 5.

Through the foregoing technical solution, the cooling system 100 for a battery provided in the present disclosure comprises the main cooling plate 1 and the connecting sheet cooling plate 2. The first cooling channel is provided in the main cooling plate 1. A cooling medium (for example, a coolant) is introduced into the first cooling channel in the main cooling plate 1, to implement heat dissipation and cooling of the battery cell 4. In addition, the second cooling channel is provided in the connecting sheet cooling plate 2. In the cooling system 100 for a battery provided in the present disclosure, a cooling medium (for example, a coolant) is introduced into the second cooling channel in the connecting sheet cooling plate 2, to implement heat dissipation and cooling of the connecting sheet 5. In addition, efficient and timely heat dissipation can be performed on the connecting sheet 5 in the battery pack through the added connecting sheet cooling plate 2, so that an impact on performance and a service life of the battery caused by overheating of the connecting sheet 5 is reduced.

Referring to FIG. 1, the main cooling plate 1 may be a complete liquid cooling plate, or may be spliced by a plurality of liquid cooling plates. The main cooling plate 1 comprises an inlet connector 11 and an outlet connector 12. Both the inlet connector 11 and the outlet connector 12 communicate with the first cooling channel. When the main cooling plate 1 is a complete liquid cooling plate, the connecting sheet cooling plate 2 is arranged above the main cooling plate 1. The connecting sheet cooling plate 2 may be a metal extruded harmonica tube, a serpentine tube, or a stamped brazing plate. A specific position of the connecting sheet cooling plate 2 on the main cooling plate 1 may be determined based on a position of the connecting sheet 5. This is not specifically limited in the present disclosure. When the main cooling plate 1 is spliced by a plurality of liquid cooling plates, the connecting sheet cooling plate 2 may be arranged on each liquid cooling plate. Alternatively, a same connecting sheet cooling plate 2 may be arranged across at least two liquid cooling plates. This is not specifically limited in the present disclosure.

In an implementation provided in the present disclosure, the first cooling channel and the second cooling channel may be independent of each other and do not communicate with each other, to implement independent control of the main cooling plate 1 and the connecting sheet cooling plate 2. When the main cooling plate 1 and the connecting sheet cooling plate 2 are independent of each other and do not communicate with each other, a substance introduced into the second cooling channel may be a coolant.

In another implementation provided in the present disclosure, referring to FIG. 1, the first cooling channel and the second cooling channel may alternatively communicate with each other, so that channels configured for a cooling medium (for example, a coolant) to flow in the entire cooling system 100 for a battery forms a path. After the coolant is introduced into the main cooling plate 1, the coolant can flow in the first cooling channel of the main cooling plate 1 and the second cooling channel of the connecting sheet cooling plate 2, and there is no need to connect each connecting sheet cooling plate 2 to a coolant transfer device. In other words, the main cooling plate 1 and the connecting sheet cooling plate 2 share a same coolant transfer device. In this way, arrangement of a plurality of coolant transfer devices can be avoided, so that internal space of the battery pack is saved, and costs of the battery pack can also be reduced.

When the first cooling channel communicates with the second cooling channel, referring to FIG. 1 and FIG. 2, first connectors 21 may be arranged at an inlet of the second cooling channel and an outlet of the second cooling channel respectively, a plurality of second connectors 13 are arranged on the main cooling plate 1, and the second connectors 13 and the first connectors 21 are in a one-to-one correspondence and communicate with each other. In the foregoing design manner, both the first connectors 21 and the second connectors 13 are extended connector structures, and the second connectors 13 and the first connectors 21 are arranged in a one-to-one correspondence manner, to facilitate the communication between the first cooling channel and the second cooling channel. The connecting sheet cooling plate 2 has a length. Two first connectors 21 are arranged at two ends of the connecting sheet cooling plate 2 respectively along a length direction. Both the first connectors 21 and the second connectors 13 may be metal connectors, and each first connector 21 and a corresponding second connector 13 extend toward each other.

To reduce a possibility of coolant leakage at a joint of the first connector 21 and the second connector 13, in an implementation provided in the present disclosure, referring to FIG. 2, a sealing hose 3 is sleeved at the joint of the first connector 21 and the second connector 13. The sealing hose 3 is configured to seal the joint of the first connector 21 and the second connector 13, so that the coolant does not easily flow out from the cooling system 100 for a battery, and a possibility that the coolant affects another structure such as the battery cell 4 in the battery pack is also reduced. An inner wall of the sealing hose 3 is arranged close to peripheral walls of the first connector 21 and the second connector 13.

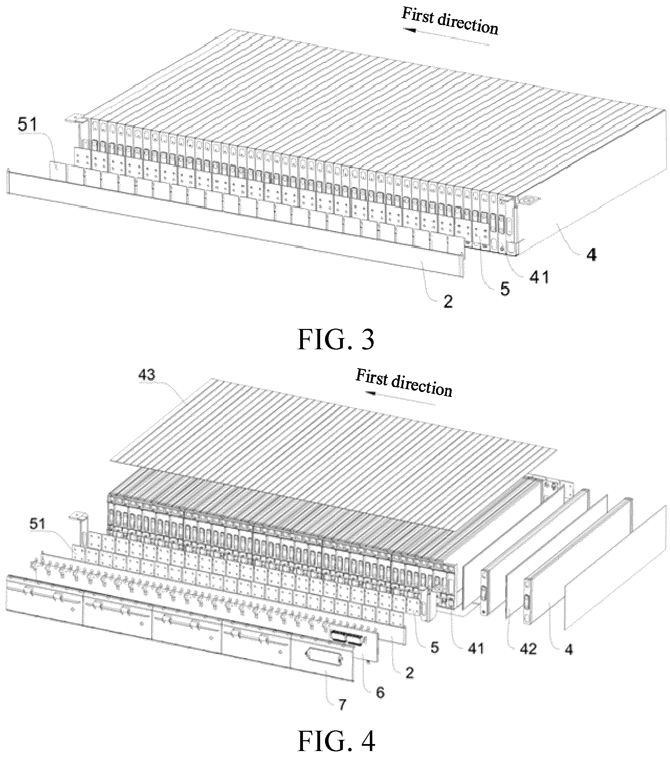

Based on the foregoing technical solution, the present disclosure further provides a battery pack 200. Referring to FIG. 3 to FIG. 6, the battery pack 200 comprises the foregoing cooling system 100 for a battery. Through this design manner, the connecting sheet cooling plate 2 that performs cooling and heat dissipation on the connecting sheet 5 is arranged in the battery pack 200, to avoid affecting use of the battery pack 200 due to overheating of the connecting sheet 5. The battery pack 200 provided in the present disclosure also has the foregoing features. To avoid repetition, details are not described herein again.

In an implementation provided in the present disclosure, referring to FIG. 3, the battery pack 200 further comprises a plurality of battery cells 4 and a plurality of connecting sheets 5, the battery cells 4 are fixedly arranged on the main cooling plate 1, the connecting sheets 5 are connected to terminals of the battery cells 4, and the connecting sheet cooling plate 2 is fixedly connected to the connecting sheets 5. In the foregoing design manner, the battery cells 4 are arranged on the main cooling plate 1, which facilitates heat dissipation and cooling of the battery cell 4. Similarly, the connecting sheet cooling plate 2 and the connecting sheet 5 are fixedly arranged, so that the connecting sheet cooling plate 2 can better perform heat dissipation and cooling on a heating connecting sheet 5.

Referring to FIG. 3 and FIG. 4, the plurality of battery cells 4 are arranged along a first direction, and form a battery cell column (comprising a column of the battery cells 4 and another structure connected or arranged on the battery cell 4) through a fixed support 41. An aerogel 42 is arranged between adjacent battery cells 4. The aerogel 42 implements heat insulation between the battery cells 4, and can absorb expansion of the battery cell 4. The fixed support 41 extends along the first direction. A plurality of connecting sheets 5 arranged at intervals along the first direction are arranged on two opposite sides of each battery cell column respectively, and the connecting sheets 5 are configured to communicate with the plurality of battery cells 4 in the battery cell column, to form a battery module. It should be noted that, one connecting sheet cooling plate 2 may be fixed to an outer side of the connecting sheet 5 located at a same side of the battery cell column, or a plurality of connecting sheet cooling plates 2 arranged along the first direction may be fixed to an outer side of the connecting sheet 5 located at a same side of the battery cell column.

In an implementation provided in the present disclosure, referring to FIG. 3 and FIG. 4, the battery pack 200 further comprises a flexible circuit board 6 and a protective housing 7. The flexible circuit board 6 and the protective housing 7 both extend along the first direction. The connecting sheet cooling plate 2 is located between the flexible circuit board 6 and the connecting sheet 5. The flexible circuit board 6 is configured to monitor and measure a voltage and a temperature of the battery module, and communicate with an entire battery management system (battery management system, BMS). The protective housing 7 covers outer sides of the flexible circuit board 6, the connecting sheet cooling plate 2, and the connecting sheet 5. The protective housing 7 is engaged with the fixed support 41, to protect the foregoing structure.

Referring to FIG. 3 to FIG. 5, to ensure that the battery cell 4 is firmly connected to the main cooling plate 1 without affecting heat conduction, in an implementation provided in the present disclosure, the battery cell 4 may be fixedly connected to the main cooling plate 1 through the heat conductive adhesive. The heat conductive adhesive between the battery cell 4 and the main cooling plate 1 may be a first heat conductive adhesive 43. In addition, to ensure that the connecting sheet 5 is firmly connected to the connecting sheet cooling plate 2 without affecting the heat conduction, in an implementation provided in the present disclosure, the connecting sheet cooling plate 2 may also be fixedly connected to the connecting sheet 5 through the heat conductive adhesive. The heat conductive adhesive between the connecting sheet 5 and the connecting sheet cooling plate 2 may be a second heat conductive adhesive 51. In other embodiments, the connecting sheet cooling plate 2 and the connecting sheet 5 may be connected and fixed through a heat conductive structural adhesive, or the battery cell 4 and the main cooling plate 1 may be connected and fixed through a heat conductive structural adhesive. This is not specifically limited in the present disclosure.

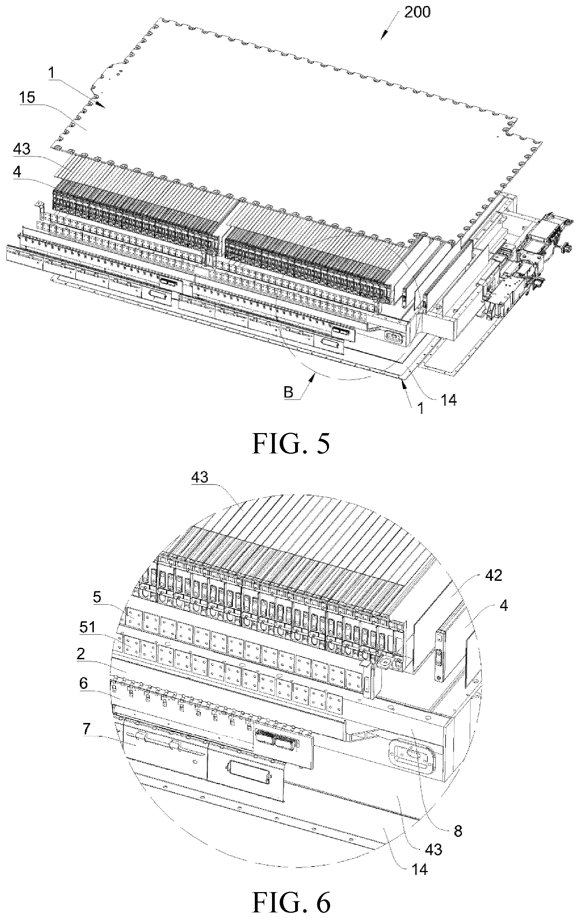

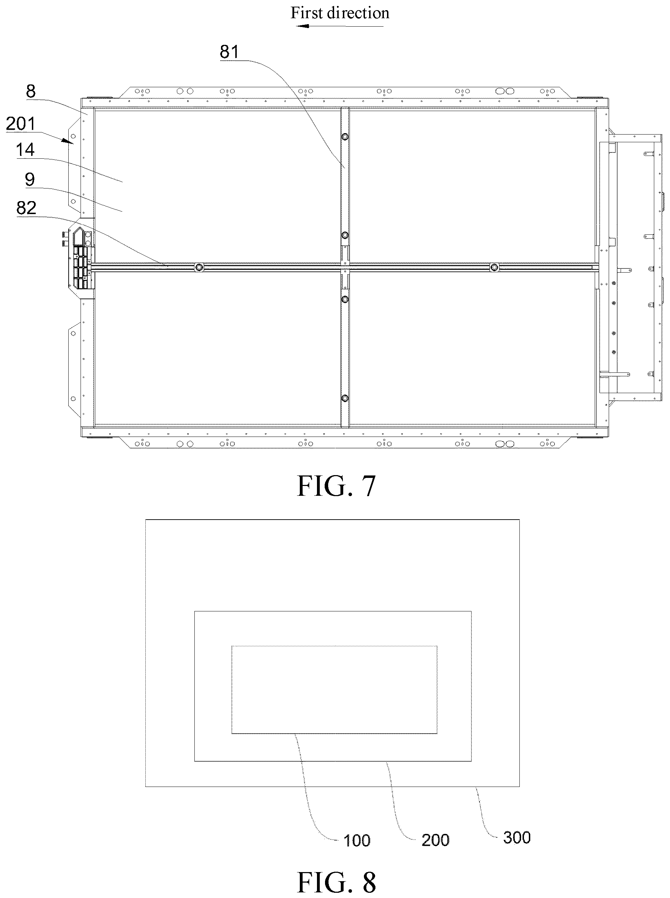

In an implementation provided in the present disclosure, referring to FIG. 5 and FIG. 7, the battery pack 200 further comprises a battery tray 201, the main cooling plate 1 may comprise a first cooling plate 14, and the first cooling plate 14 may be integrated on the battery tray 201. In the foregoing design manner, the battery module is placed on the battery tray 201, and heat dissipation is directly performed through the first cooling plate 14 integrated on the battery tray 201, so that an integration degree of the first cooling plate 14 and the battery pack 200 after being combined is higher, and heat dissipation is easily performed on the battery cell 4 in the battery module. In addition, the first cooling plate 14 and the battery tray 201 may alternatively be two independent structures fixed together, and the first cooling plate 14 and the battery tray 201 may alternatively be integrated into a same structure (that is, the battery tray 201 with a liquid cooling function is formed).

Referring to FIG. 5, FIG. 6, and FIG. 7, the battery tray 201 comprises a bottom plate 9 and an outer frame 8. The outer frame 8 is a frame structure formed by welding an extruded material. The outer frame 8 is enclosed outside the battery module. The first cooling plate 14 is integrated on the bottom plate 9, and the bottom plate 9 and the first cooling plate 14 integrated together are fixed to the bottom of the outer frame 8 by friction stir welding or in another form. The battery module is fixed to the first cooling plate 14 integrated with the bottom plate through a heat conductive adhesive or the heat conductive structural adhesive. One or more battery modules may be arranged in the outer frame 8. This is not specifically limited in the present disclosure.

In the embodiment shown in FIG. 7, four battery modules are arranged in the outer frame 8. An intermediate expansion beam 81 and an intermediate longitudinal beam 82 are fixed to an inner wall of the outer frame 8, and the intermediate expansion beam 81 and the intermediate longitudinal beam 82 are cross-connected in the outer frame 8 in a "cross" shape, so that an interior of the outer frame 8 is divided into four regions, and one battery module may be arranged in each region. In two battery modules distributed along the first direction, only one connecting sheet cooling plate 2 may be arranged on the connecting sheet 5 located at a same side of the two battery modules, a height of the intermediate expansion beam 81 can avoid the connecting sheet cooling plate 2, and the first cooling plate 14 is bonded to lower surfaces of the battery cells 4 of all battery modules in the outer frame 8 through the heat conductive adhesive or the heat conductive structural adhesive.

In a specific implementation provided in the present disclosure, referring to FIG. 5 and FIG. 6, the battery pack 200 further comprises a sealing cover, the main cooling plate 1 further comprises a second cooling plate 15, and the second cooling plate 15 may be integrated on the sealing cover. In the foregoing design manner, the sealing cover can also have an effect of cooling the battery cell, to efficient perform cool and heat dissipation on the battery cell. The second cooling plate 15 and the sealing cover may be two independent structures fixed together, and the second cooling plate 15 and the sealing cover may alternatively be integrated into a same structure (that is, a sealing cover having a cooling function is formed), so that the battery pack 200 of the present disclosure has a higher degree of integration. The second cooling plate 15 integrated with the sealing cover may be fixedly connected to upper surfaces of the battery cells 4 of all the battery modules in the outer frame 8 through the heat conductive adhesive or the heat conductive structural adhesive. The connecting sheet cooling plate 2 may communicate with the first cooling plate 14, or may communicate with the second cooling plate 15, or may communicate with both the first cooling plate 14 and the second cooling plate 15. This is not specifically limited in the present disclosure. In other embodiments, the main cooling plate 1 may comprise only the first cooling plate 14, and a sealing plate may be a cover plate made of plastic or metal, and is arranged on the battery tray 201.

Based on the foregoing technical solution, the present disclosure further provides a vehicle 300. Referring to FIG. 8, the vehicle 300 comprises the foregoing cooling system 100 for a battery or the foregoing battery pack 200. In the foregoing design manner, the vehicle 300 in which the cooling system 100 for a battery or the battery pack 200 of the present disclosure is arranged is not affected by overheating of the connecting sheet 5, so that performance of the vehicle 300 is more stable during operation, and a failure rate of the vehicle 300 is reduced. The battery pack 200 may be mounted on the vehicle 300, or may be arranged in a form of integrated battery vehicle body.

An implementation principle of this embodiment of the present disclosure is as follows. The main cooling plate 1 is fixedly arranged on the battery cell 4. The connecting sheet cooling plate 2 is fixedly arranged on the outer side of the connecting sheet 5, and the coolant or a refrigerant is introduced into the main cooling plate 1 and the connecting sheet cooling plate 2. When heat dissipation is performed on the battery cell 4, heat dissipation is also performed on the connecting sheet 5, so that the connecting sheet 5 is no longer passively cooled only by air. In addition, the connecting sheet cooling plate 2 is arranged to directly actively cool the connecting sheet 5, to implement efficient cooling of the connecting sheet 5 and reduce impact of overheating of the connecting sheet 5 on performance and a service life of the battery.

The exemplary embodiments of the present disclosure are described in detail above with reference to the accompanying drawings, but the present disclosure is not limited to the specific details in the above embodiments. Various simple variations may be made to the technical solution of the present disclosure within the scope of the technical idea of the present disclosure, and such simple variations shall all fall within the protection scope of the present disclosure.

It should be further noted that, the specific technical features described in the above specific embodiments may be combined in any suitable manner without contradiction. To avoid unnecessary repetition, various possible combinations are not further described in the present disclosure.

In addition, the various embodiments of the present disclosure may be combined without departing from the idea of the present disclosure, and such combinations shall also fall within the scope of the present disclosure.

## Claims

1. A cooling system (100) for a battery, comprising:
a main cooling plate (1), a first cooling channel being provided in the main cooling plate (1), and the main cooling plate (1) being configured to cool a battery cell (4); and
a connecting sheet cooling plate (2), the connecting sheet cooling plate (2) being arranged on the main cooling plate (1), a second cooling channel being provided in the connecting sheet cooling plate (2), and the connecting sheet cooling plate (2) being configured to cool a connecting sheet (5).

2. The cooling system (100) for a battery according to claim 1, wherein the first cooling channel and the second cooling channel are independent of each other and do not communicate with each other.

3. The cooling system (100) for a battery according to claim 1, wherein the first cooling channel communicates with the second cooling channel.

4. The cooling system (100) for a battery according to claim 1 or 3, wherein first connectors (21) are arranged at an inlet and an outlet of the second cooling channel respectively, a plurality of second connectors (13) are arranged on the main cooling plate (1), and the second connectors (13) and the first connectors (21) are in a one-to-one correspondence and communicate with each other.

5. The cooling system (100) for a battery according to claim 4, wherein a sealing hose (3) is sleeved at a joint of the first connector (21) and the second connector (13).

6. A battery pack (200), comprising the cooling system (100) for a battery according to any one of claims 1 to 5.

7. The battery pack (200) according to claim 6, the battery pack (200) further comprising a plurality of battery cells (4) and a plurality of connecting sheets (5), the battery cells (4) being fixedly arranged on the main cooling plate (1), the connecting sheets (5) being connected to terminals of the battery cells (4), and the connecting sheet cooling plate (2) being fixedly connected to the connecting sheets (5).

8. The battery pack (200) according to claim 7, wherein the battery cells (4) are fixedly connected to the main cooling plate (1) through a heat conductive adhesive.

9. The battery pack (200) according to claim 7 or 8, wherein the connecting sheet cooling plate (2) is fixedly connected to the connecting sheets (5) through a heat conductive adhesive.

10. The battery pack (200) according to any one of claims 6 to 9, the battery pack (200) further comprising a battery tray (201), the main cooling plate (1) comprising a first cooling plate (14), and the first cooling plate (14) being integrated on the battery tray (201).

11. The battery pack (200) according to claim 10, wherein the battery tray (201) comprises an outer frame (8) and a bottom plate (9), and the first cooling plate (14) is integrated on the bottom plate (9).

12. The battery pack (200) according to claim 10, the battery pack further comprising a sealing cover, the main cooling plate (1) further comprising a second cooling plate (15), and the second cooling plate (15) being integrated on the sealing cover.

13. A vehicle (300), comprising the cooling system (100) for a battery according to any one of claims 1 to 5 or the battery pack (200) according to any one of claims 6 to 12.
